# EUROPEAN PATENT SPECIFICATION

(11) **EP 2 466 099 B1**
(45) Date of publication and mention of the grant of the patent: **08.10.2014**
(21) Application number: 11190297.9
(22) Date of filing: 23.11.2011
(51) Int. Cl.: F02D 41/04

(54) **Stop control apparatus for internal combustion engine**
Stopp-Steuervorrichtung für Verbrennungsmotor
Appareil de contrôle d'arrêt pour moteur à combustion interne

(30) Priority: 20.12.2010 JP 2010282522
(43) Date of publication of application: 20.06.2012
(73) Proprietor: Honda Motor Co., Ltd., Tokyo 107-8556 (JP)
(72) Inventor: Hagiwara, Masayuki, Saitama, 351-0193 (JP)
(74) Representative: Feller, Frank

(56) References cited:
- EP-A1- 2 357 340
- WO-A2-2009/007819
- DE-A1-102010 001 725

## Description

The present invention relates to a stop control apparatus for controlling a stop position of a piston in an internal combustion engine at the time the engine stops.

If there exists a cylinder which is in the state where both of the intake valve and the exhaust valve are opened when the engine stops (the state will be hereinafter referred to as "overlapped state"), the starting of the engine may sometimes become difficult due to backward flow of exhaust gases to the intake pipe.

Patent publication No. 4,435,844 (JP'844) discloses a stop position control method in which the intake air amount of the engine is increased by opening the throttle valve immediately before stoppage in order to avoid the engine stoppage in the overlapped state. According to this method, the throttle valve is opened before the intake stroke start timing of the last compression stroke cylinder immediately before the stoppage. The last compression stroke cylinder is a cylinder which is in the compression stroke upon engine stoppage. This throttle valve opening control increases an intake air amount of the last compression stroke cylinder and the last explosion stroke cylinder (which is in the explosion stroke upon engine stoppage), which causes reverse rotation of the engine immediately before stoppage to avoid the engine stoppage in the overlapped state.

According to the above-described stop position control method, the engine stoppage in the overlapped state can be avoided in a 4-cylinder engine or a 6-cylinder engine. However, as to a 3-cylinder engine, the above-described stop position control method may cause a problem of enhancing the possibility of stopping in the overlapped state.

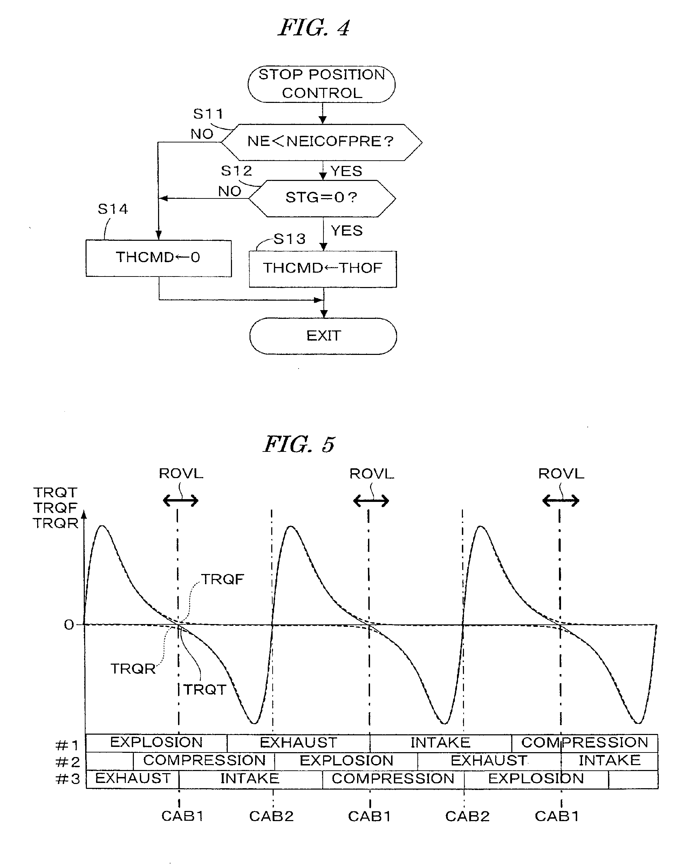

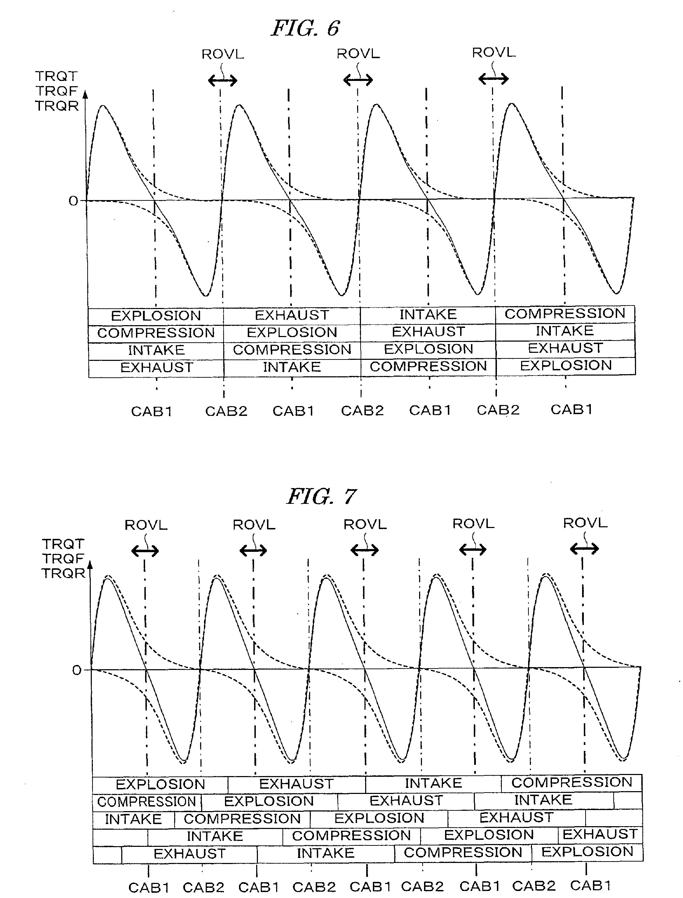

This problem is specifically described below with reference to FIGs. 5 and 6. In FIGs. 5 and 6, the forward rotation torque TRQF and the reverse rotation torque TRQR are shown by the thick broken lines, and the resultant torque TRQT (= TRQF + TRQR) of the both torques is shown by the thin solid line. The forward rotation torque TRQF is generated by the cylinder of the explosion stoke in the state where no combustion is performed in the engine and the throttle valve opening is maintained at a constant value. The reverse rotation torque TRQR is generated by the cylinder of the compression stroke. FIGs. 5 and 6 correspond respectively to a 3-cylder engine and a 4-cylinder engine. The rotation phases CAB1 and CAB2 at which the resultant torque TRQT becomes "0" are indicated by dot-and-dash lines. The rotation phases CAB 1 and CAB2 will be hereinafter referred to as "torque balance angle".

The first torque balance angle CAB 1 indicated by the thick dot-and-dash line is an angular position at which the engine stops with the highest possibility, and the second torque balance angle CAB2 indicated by the thin dot-and-dash line is an angular position at which the engine stops with the secondary high possibility. Further, the strokes of each cylinder are shown in the lower area of FIGs. 5 and 6. "ROVL" in FIGs. 5 and 6 indicates the angular range where both of the intake valve and the exhaust valve are opened. This angular range will be hereinafter referred to as "overlap range ROVL".

As shown in FIG. 6, the first torque balance angle CAB1 coincides with the center angles of the intake stroke and the exhaust stroke in the 4-cylinder engine. Accordingly, the stoppage in the overlapped state can be avoided by increasing the intake air amount of the last expansion stroke cylinder and stopping the engine at the first torque balance angle CAB 1.

On the other hand, as to the 3-cylinder engine, the first torque balance angle CAB 1 coincides with the start timing of the intake stroke as shown in FIG. 5. Accordingly, the engine always stops in the overlapped state if stopping the engine at the first torque balance angle CAB 1. Further, the first torque balance angle CAB1 substantially corresponds to a center angular position of the angular range where the expansion stroke of a first cylinder and the compression stroke of a second cylinder overlap with each other. In other words, the first torque balance angle CAB 1 is in the overlap range ROVL where the opening periods of the intake valve and exhaust valve of a third cylinder overlap with each other. Therefore, as to such an engine that the first torque balance angle CAB1 is in the overlap range ROVL (e.g., 5-cylinder engine), the same problem occurs (refer to FIG. 7).

### SUMMARY OF THE INVENTION

The present invention was made contemplating the above-described point, and an objective of the present invention is to provide a stop control apparatus for an internal combustion engine, which makes it possible to surely avoid the stoppage in the overlapped state in the engine which stops in the overlapped state with high possibility if applying the conventional stop position control method.

To attain the above objective, the present invention provides a stop control apparatus for an internal combustion engine, which controls a stop position of a piston in the engine upon stoppage of the engine. The engine is a 3-cylinder engine, . The engine includes an intake air control valve (3) provided upstream of the intake valve of each cylinder, for controlling an intake air amount of the engine. The stop control apparatus is characterized by including intake air control means for closing the intake air control valve (3) after a stop instruction of the engine, and opening the intake air control valve (3) after a closing timing of an intake valve of a last compression stroke cylinder which is in the compression stroke upon the engine stoppage.

With this configuration, the intake air control valve is closed after the stop instruction of the engine, and opened after the closing timing of the intake valve of the last compression stroke cylinder. According to this operation of the intake air control valve, an amount of air sucked into the last compression stroke cylinder is not increased, but an amount of air sucked into the last intake stroke cylinder is increased. The increase in the air amount promotes the falling movement of the piston, and the force necessary for returning the increased air to the intake pipe reduces the reverse torque if the engine begins reverse rotation immediately before stoppage. Consequently, the reverse rotation with which the piston moves back to a position in the vicinity of the top dead center starting the intake stroke, is prevented, which makes it possible to avoid the engine stoppage in the overlapped state.

The present invention further provides another stop control apparatus for the engine described above, which controls a stop position of a piston in the engine upon stoppage of the engine. The stop control apparatus is characterized by including intake air control means for closing the intake air control valve (3) after a stop instruction of the engine, and opening the intake air control valve (3) at the same timing of an opening timing of an intake valve of a last intake stroke cylinder which is in the intake stroke upon the engine stoppage, or during the opening period of the intake valve.

With this configuration, the intake air control valve is closed after the engine stop instruction, and thereafter opened at the same timing of the opening timing of the intake valve of the last intake stroke cylinder, or during the opening period of the intake valve. According to this operation of the intake air control valve, an amount of air sucked into the last compression stroke cylinder and the last explosion stroke cylinder is not increased, but an amount of air sucked into the last intake stroke cylinder is increased. Therefore, the reverse rotation with which the piston moves back to a position in the vicinity of the top dead center starting the intake stroke, is prevented, which makes it possible to avoid the engine stoppage in the overlapped state.

Preferably, the stop control apparatus further includes rotational speed detecting means for detecting a rotational speed (NE) of the engine, and crankshaft rotation angle detecting means for detecting a rotation angle (CA) of a crankshaft of the engine. The opening timing (CATHO) of the intake air control valve (3) is determined based on the detected engine rotational speed (NE) and crankshaft rotation angle (CA).

With this configuration, the opening timing of the intake air control valve is determined based on the detected engine rotational speed and crankshaft rotation angle. The engine rotational speed is correlated with the inertial energy of the engine rotation, and the opening/closing state (operating phase) of the intake valve can be determined from the crankshaft rotation angle. Accordingly, by determining the opening timing of the intake air control valve based on the detected engine rotational speed and crankshaft rotation angle, the intake air control valve can be opened at an appropriate timing for avoiding the engine stoppage in the overlapped state.

### BRIEF DESCRIPTION OF THE DRAWINGS

FIG. 1 shows a configuration of an internal combustion engine and a control system therefor according to one embodiment of the present invention;
FIG. 2 shows lift curves of an intake valve and an exhaust valve, the strokes of each cylinder, and a stage number (STG) in this embodiment;
FIGs. 3A - 3D show time charts for illustrating the stop position control in this embodiment compared with a conventional stop position control;
FIG. 4 is a flowchart of a stop position control process;
FIG. 5 is a time chart for showing inertia torques (TRQT, TRQF, TRQR) and the strokes of each cylinder in the state where combustion in the engine is not performed (3-cylinder engine);
FIG. 6 is a time chart for showing inertia torques (TRQT, TRQF, TRQR) and the strokes of each cylinder in the state where combustion in the engine is not performed (4-cylinder engine);
FIG. 7 is a time chart for showing inertia torques (TRQT, TRQF, TRQR) and the strokes of each cylinder in the state where combustion in the engine is not performed (5-cylinder engine); and
FIG. 8 is a time chart for showing inertia torques (TRQT, TRQF, TRQR) and the strokes of each cylinder in the state where combustion in the engine is not performed (6-cylinder engine).

### DETAILED DESCRIPTION OF THE PREFERRED EMBODIMENTS

Preferred embodiments of the present invention will now be described with reference to the drawings.

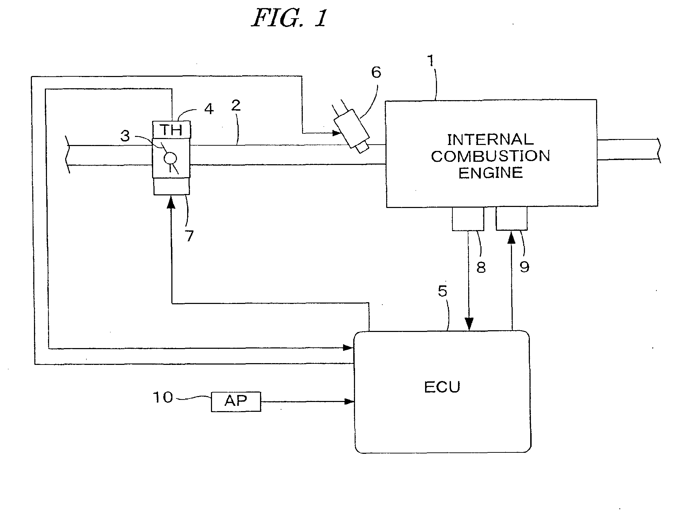

FIG. 1 is a schematic diagram showing a configuration of an internal combustion engine and a control system therefor according one embodiment of the present invention. The internal combustion engine 1 (hereinafter referred to as "engine") is a 3-cylinder engine and has an intake pipe 2 provided with a throttle valve 3. The throttle valve 3 is provided with a throttle valve opening sensor 4 for detecting an opening TH of the throttle valve 3, and a detection signal of the throttle valve sensor 4 is supplied to an electronic control unit 5 (hereinafter referred to as "ECU"). An actuator 7 for actuating the throttle valve 3 is connected to the throttle valve 3, and the operation of the actuator 7 is controlled by the ECU 5.

A fuel injection valve 6 is provided for each cylinder at a position slightly upstream of an intake valve (not shown) in the intake pipe 2. Each injection valve is connected to a fuel pump (not shown) and electrically connected to the ECU 5. A valve opening period of each fuel injection valve 6 is controlled by a signal from the ECU 5. Each cylinder of the engine 1 is provided with a spark plug 9 which is connected to the ECU 5. The ECU 5 supplies an ignition signal to each spark plug 9.

A crank angle position sensor 8 for detecting a rotational angle of a crankshaft (not shown) of the engine 1 is connected to the ECU 5, and a signal corresponding to a detected rotational angle of the crankshaft is supplied to the ECU 5. The crank angle position sensor 8 includes a cylinder discrimination sensor which outputs a pulse (hereinafter deferred to as "CYL pulse") at a predetermined crank angle position for the specific cylinder of the engine 1. The crank angle position sensor also includes a top dead center (TDC) sensor which outputs a TDC pulse at a crank angle position of a predetermined crank angle before the TDC at which the intake stroke starts in each cylinder (i.e., at every 240 degree crank angle in the 3-cylinder engine), and a crank angle (CRK) sensor for generating one pulse (hereinafter referred to as "CRK pulse") at intervals of a constant crank angle period (e.g., a period of six degrees, which is shorter than the period of generation of the TDC pulse). The CYL pulse, the TDC pulse, and the CRK pulse are supplied to the ECU 5. The CYL, TDC and CRK pulses are used for controlling various timings, such as a fuel injection timing and an ignition timing, and detecting an engine rotational speed NE.

An accelerator sensor 10 for detecting a depression amount AP of the accelerator pedal of the vehicle driven by the engine 1 (the depression amount will be referred to as "accelerator operation amount") is connected to the ECU 5, and the detection signal of the accelerator sensor 10 is supplied to the ECU 5.

The ECU 5 includes an input circuit having various functions including a function of shaping the waveforms of input signals from the various sensors, a function of correcting the voltage levels of the input signals to a predetermined level, and a function of converting analog signal values into digital signal values. The ECU 5 further includes a central processing unit (hereinafter referred to as "CPU"), a memory circuit, and an output circuit. The memory circuit preliminarily stores various operating programs to be executed by the CPU and the results of computation or the like by the CPU. The output circuit supplies drive signals to the fuel injection valve 6 and the like. The ECU 5 performs a control of the valve opening period of the fuel injection valve 6 and an ignition timing control of the spark plug 9 based on the detection signals of the above-described sensors. The ECU also calculates a target opening THCMD of the throttle valve 3 and performs a drive control of the actuator 7 so that the detected throttle valve opening TH coincides with the target opening THCMD.

Next, an outline of the piston position control upon engine stoppage (the control will be hereinafter referred to as "stop position control") in this embodiment is described below.

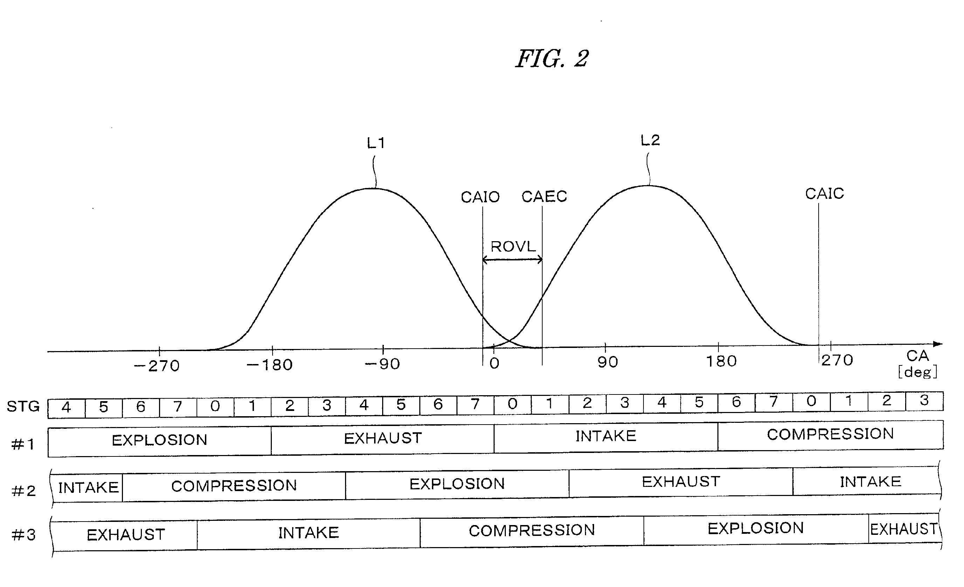

FIG. 2 shows graphs for illustrating the parameters used in the stop position control. In FIG. 2, the curves L1 and L2 respectively indicate a lift curve of the exhaust valve of #1 cylinder, and a lift curve of the intake valve of #1 cylinder. Further, a stage number STG and the strokes of each cylinder (#1 cylinder, #2 cylinder, and #3 cylinder) are shown in FIG. 2. The stage number STG is a parameter for indicating a crank angle range of every 30 rotation angles of the crankshaft. The stage number STG is defined so that STG takes "0" for the 30-degree period form the intake stroke start timing of each cylinder, sequentially increases to "7", and next returns to "0".

In FIG. 2, CAIO and CAIC respectively indicate an opening timing and a closing timing of the intake valve, and CAEC indicates a closing timing of the exhaust valve. Therefore, the angular range from the intake valve opening timing CAIO to the exhaust valve closing timing CAEC corresponds to the overlap range ROVL.

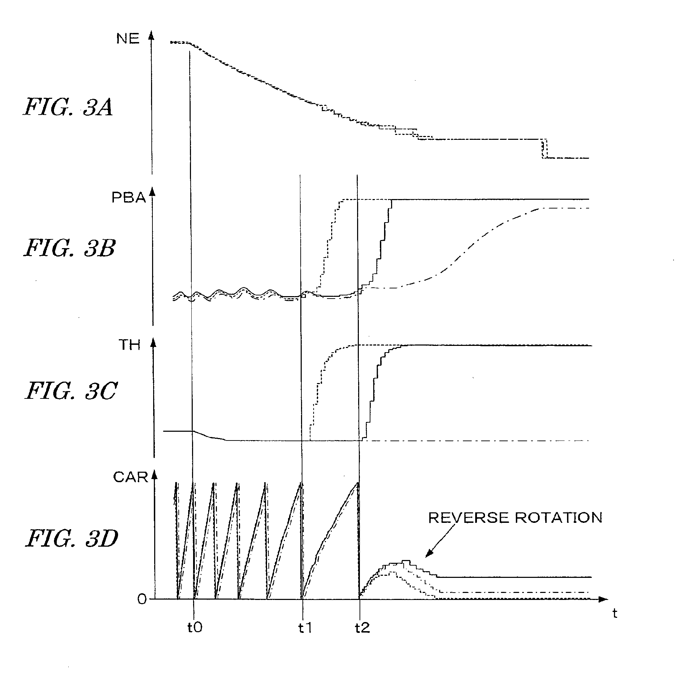

FIGs. 3A - 3D show time charts for illustrating the stop position control in this embodiment, compared with the conventional stop position control. In these figures, the solid line corresponds to the control in this embodiment, the dashed line corresponds to the control shown in JP'844 (hereinafter referred to as "conventional control"), and the dot-and-dash line corresponds to an example in which the throttle valve opening is maintained at the fully-opened state. FIGs. 3A - 3D respectively show changes in the engine rotational speed NE, the intake pressure PBA (the pressure in the intake pipe 2 downstream of the throttle valve 3), the throttle valve opening TH, and a crank angle CAR. The crank angle CAR is defined as follows: CAR takes "0" degree at the start timing of the intake stroke of the cylinder which in the intake stroke upon engine stoppage, increases up to "240" degrees, and returns to "0" degree when reaching "240" degrees.

The ignition switch is turned off at time t0, and a closing instruction of the throttle valve is simultaneously issued. According to the conventional control, a valve opening instruction is issued at time t1, and the throttle valve opening TH increases as indicated by the dashed line in FIG. 3C. In this embodiment, the valve opening instruction is issued at time t2, and the throttle valve opening TH increases as indicated by the solid line. The intake pressure PBA increases with the increase in the throttle valve opening TH (FIG. 3B). Consequently, according to the conventional control, an amount of air sucked into the last compression stroke cylinder and the last expansion stroke cylinder is increased, which causes the reverse rotation of the engine as indicated by the dashed line in FIG. 3D so that the crank angle CAR is decreased to "0", i.e., the intake stroke start angular position. That is, the engine 1 stops in the overlapped state.

On the other hand, in this embodiment, an amount of air sucked into the last intake stroke cylinder is increased, so that the increase in the sucked air promotes the falling movement of the piston, and the force necessary for returning the increased air to the intake pipe reduces the torque causing reverse rotation when the engine begins reverse rotation immediately before stoppage. Consequently, the reverse rotation is suppressed as indicated by the solid line in FIG. 3D, which prevents the piston from moving back to a position in the vicinity of the top dead center starting the intake stroke, i.e., the engine stoppage in the overlapped state can be avoided.

It is to be noted that in the example of maintaining the throttle valve opening at the fully-opened state, the piston stops, as indicated by the dot-and-dash line of FIG. 3D, in the vicinity of the top dead center starting the intake stroke as almost similarly to the conventional control.

The following two control methods can be used as a control method for increasing the intake air amount of the last intake stroke cylinder. It is to be noted that the opening state of the throttle valve is maintained until the engine stops in both of the following first and second methods.

First method (which is not part of the invention): opening the throttle valve after closing of the intake valve of the last compression stroke cylinder; and

Second method: opening the throttle valve simultaneously at the opening timing of the intake valve of the last intake stroke cylinder, or opening the throttle valve during the valve opening period of the intake valve of the last intake stroke cylinder.

These two methods are explained with reference to FIG. 2. If #1 cylinder is the last compression stroke cylinder, the intake air amount of #2 cylinder, which is the last intake stroke cylinder, is increased by opening the throttle valve at a comparatively early timing after the intake valve closing timing CAIC (e.g., before the end timing of the period in which the stage number STG is equal to "1").

Further, if the #1 cylinder is the last intake stroke cylinder, the intake air amount of #1 cylinder is increased by opening the throttle valve at the same time timing of the intake valve opening timing CAIO, or opening the throttle valve at a comparatively early timing after the intake valve opening timing CAIO (e.g., before the end timing of the period in which the stage number STG is equal to "0").

That is, in the first method, it is preferable to open the throttle valve during a predetermined period TTHO (e.g., a period of 40 degrees of the crank angle) from the closing timing of the intake valve of the last compression stroke cylinder, and in the second method, it is preferable to open the throttle valve during the predetermined period TTHO from the opening timing of the intake valve of the last intake stroke cylinder.

FIG. 4 is a flowchart of a process which performs the stop position control with the second method described above. This process is executed at predetermined time intervals (for example, 10 milliseconds) by the CPU in the ECU5 during the period from the time the engine stop instruction is issued to the time the engine 1 stops. The engine stop instruction is issued when the ignition switch is turned off, or when the idling stop instruction for temporarily stopping the idling operation of the engine 1 is issued.

In step S11, it is determined whether or not the engine rotational speed NE is lower than a predetermined rotational speed NEICOFPRE (e.g., 400 rpm). Since the answer to step S11 is negative (NO) at first, the process proceeds to step S 14, in which the target opening THCMD of the throttle valve 3 is set to "0".

When the engine rotational speed NE falls and the answer to step S11 becomes affirmative (YES), it is determined whether or not the stage number STG is "0" (step S12). If the answer to step S12 is negative (NO), the process proceeds to step S14.

If the answer to step S12 is affirmative (YES), the process proceeds to step S 13, in which the target opening THCMD is set to a predetermined opening THOF (e.g., 20 degrees).

According to the process of FIG. 4, the inertial energy of engine rotation is taken into consideration with the engine rotational speed NE, and the optimal throttle valve opening timing CATHO can be determined by the stage number STG.

It is to be noted that the above-described first method can be realized by determining whether or not the stage number STG is "1" in step S 12 of FIG. 4.

As to the 3-cylinder engine, the first torque balance angle CAB 1 is in the overlap range ROVL as shown in FIG. 5. Therefore in this embodiment, the stop position control described above is performed so as to stop the engine 1 at an angular position other than the first torque balance angle CAB 1. It is to be noted that a change rate of the resultant torque TRQT with respect to the crank angle (the inclination of the resultant torque curve shown in FIG. 5) is comparatively large at the second torque balance angle CAB2. Accordingly, the possibility that the engine stops at the second torque balance angle CAB2 is very small, if maintaining the throttle valve opening at a constant value.

FIG. 7 also shows torque changes in a 5-cylinder engine similarly to FIG. 5. As apparent from FIG. 7, the first torque balance angle CAB1 is in the overlap range ROVL like the 3-cylinder engine. Therefore, the above-described first and second method are effective also in the 5-cylinder engine, i.e., the two methods can prevent the stoppage in the overlapped state.

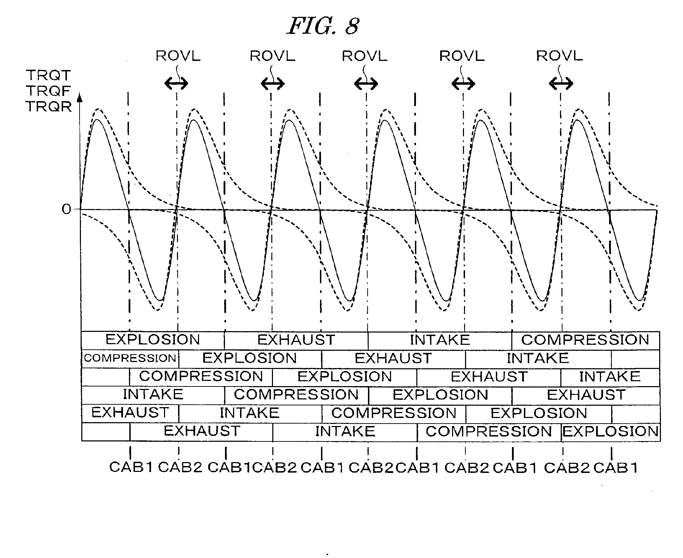

FIG. 8 also shows torque changes in a 6-cylinder engine similarly to FIG. 5. As apparent from FIG. 8, the second torque balance angle CAB2 is in the overlap range ROVL. Therefore, the stoppage in the overlapped state can be avoided by stopping the engine at the first torque balance angle CAB1 using the control method shown in JP'844. However, in the 6-cylinder engine, the absolute value of the inclination of the torque change curve of the resultant torque TRQT at the first torque balance angle CAB 1 is comparatively large and substantially equal to the inclination of the torque change curve of the resultant torque TRQT at the second torque balance angle CAB2. Accordingly, the possibility of stopping at the first torque balance angle CAB1 is almost the same as the possibility of stopping at the second torque balance angle CAB2, and the both possibilities are comparatively low compared with that of the engine having 5 cylinders or less cylinders. In addition, the friction of the 6-cylinder engine is greater than that of the 5-cylinder or less cylinder engine. Therefore, the 6-cylinder engine may, with high possibility, stop at an angular position other than the torque balance angles CAB 1 and CAB2.

Consequently, as to the 6-cylinder engine, the stop position control method in this embodiment may not be advantageous. However, when the 6-cylinder engine is operated in the 3-cylinder halting mode wherein only three cylinders are operated, the torque change characteristic is the same as that of the 3-cylinder engine (the characteristic of FIG. 5). Therefore, the stop position control method in this embodiment is advantageous over the conventional method. Further, the stop position control method in this embodiment is also advantageous, for example, when the 10-cylinder engine is operated in 5-cylinder halting mode.

In this embodiment, the throttle valve 3 corresponds to the intake air control valve, and the ECU 5 and the actuator 7 constitute the intake air control means. The crank angle position sensor 8 corresponds to the rotational speed detecting means and crankshaft rotation angle detecting means. The 3-cylinder halting mode of the 6-cylinder engine or the 5-cylinder halting mode of the 10-cylinder engine corresponds to "the operation mode in which a crank angle corresponding to a substantially central position of a crank angular range where the explosion stroke of a first cylinder and the compression stroke of a second cylinder overlap with each other, is in an overlap range where opening periods of the intake and exhaust valves of a third cylinder overlap with each other".

The present invention is not limited to the embodiment described above, and various modifications may be made. For example, the stop position control which realizes the first or second method is not limited to the method of FIG. 4. Another control method shown in JP'844 may also applicable, since the relationship between the engine operating parameter values (the engine rotational speed NE, the crank angle CA (stage number STG), and the throttle valve opening THOF) at the throttle valve opening timing CATHO and the piston stop position, can previously be determined empirically.

Further, the present invention can also be applied to the stop position control of a watercraft propulsion engine such as an outboard engine having a vertically extending crankshaft.

A stop control apparatus for an internal combustion engine, which controls a stop position of a piston in the engine upon stoppage of the engine. The engine is a 3-cylinder engine, a 5-cylinder engine, or an engine which can be operated in an operation mode in which a crank angle corresponding to a substantially central position of a crank angular range where the explosion stroke of a first cylinder and the compression stroke of a second cylinder overlap with each other, is in an overlap range where opening periods of the intake and exhaust valves of a third cylinder overlap with each other. The engine includes an intake air control valve provided upstream of the intake valve of each cylinder, for controlling an intake air amount of the engine. The intake air control valve is closed after a stop instruction of the engine, and opened after a closing timing of an intake valve of a last compression stroke cylinder which is in the compression stroke upon the engine stoppage.

## Claims

1. A stop control apparatus for an internal combustion engine, which controls a stop position of a piston in said engine upon stoppage of said engine,
wherein said engine is a 3-cylinder engine and said engine includes an intake air control valve provided upstream of the intake valve of each cylinder, for controlling an intake air amount of said engine,
**characterized by** including intake air control means for closing said intake air control valve after a stop instruction of said engine, and opening said intake air control valve at the same timing of an opening timing of an intake valve of a last intake stroke cylinder which is in the intake stroke upon the engine stoppage, or during the opening period of said intake valve.

2. A stop control apparatus according to claim 1, further including: rotational speed detecting means for detecting a rotational speed of said engine; and
crankshaft rotation angle detecting means for detecting a rotation angle of a crankshaft of said engine,
wherein the opening timing of said intake air control valve is determined based on the detected engine rotational speed and crankshaft rotation angle.

3. A stop control method for an internal combustion engine, which controls a stop position of a piston in said engine upon stoppage of said engine,
wherein said engine is a 3-cylinder engine and said engine includes an intake air control valve provided upstream of the intake valve of each cylinder, for controlling an intake air amount of said engine,
said stop control method being **characterized by** including the steps of:
a) closing said intake air control valve after a stop instruction of said engine; and
b) opening said intake air control valve at the same timing of an opening timing of an intake valve of a last intake stroke cylinder which is in the intake stroke upon the engine stoppage, or during the opening period of said intake valve.

4. A stop control method according to claim 3, further including the steps of:
c) detecting a rotational speed of said engine; and
d) detecting a rotation angle of a crankshaft of said engine,
wherein the opening timing of said intake air control valve is determined based on the detected engine rotational speed and crankshaft rotation angle.

## Patentansprüche

1. Anhalte-Steuer-/Regelvorrichtung für einen Verbrennungsmotor, welche eine Anhalte-Position eines Kolbens in dem Motor auf ein Anhalten des Motors hin steuert/regelt,
wobei der Motor ein Dreizylinder-Motor ist und der Motor ein Einlassluft-Steuer-/regelventil umfasst, welches stromaufwärts von dem Einlassventil von jedem Zylinder bereitgestellt ist, zum Steuern/Regeln einer Einlassluftmenge des Motors,
**dadurch gekennzeichnet, dass** sie Einlassluft-Steuer-/Regelmittel zum Schließen des Einlassluft-Steuer-/Regelventils nach einer AnhalteAnweisung des Motors und zum Öffnen des Einlassluft-Steuer-/Regelventils zur selben Zeit wie eine Öffnungszeit eines Einlassventils eines letzten Einlasstakt-Zylinders umfasst, welcher auf ein Anhalten des Motors hin in dem Einlasstakt ist, oder während des Öffnungs-Zeitraums des Einlassventils.

2. Anhalte-Steuer-/Regelvorrichtung nach Anspruch 1, ferner umfassend:
Drehzahl-Detektionsmittel zum Detektieren einer Drehzahl des Motors; und
Kurbelwellen-Drehwinkel-Detektionsmittel zum Detektieren eines Drehwinkels einer Kurbelwelle des Motors,
wobei die Öffnungszeit des Einlassluft-Steuer-/Regelventils auf Grundlage der detektierten Motor-Drehzahl und des detektierten Kurbelwellen-Drehwinkels bestimmt wird.

3. Anhalte-Steuer-/Regelverfahren für einen Verbrennungsmotor, welches eine Anhalte-Position eines Kolbens in dem Motor auf ein Anhalten des Motors hin steuert/regelt,
wobei der Motor ein Dreizylinder-Motor ist und der Motor ein EinlassSteuer-/Regelventil umfasst, welches stromaufwärts von dem Einlassventil jedes Zylinders bereitgestellt ist, zum Steuern/Regeln einer Einlassluftmenge des Motors,
wobei das Anhalte-Steuer-/Regelverfahren **dadurch gekennzeichnet ist, dass** es die Schritte umfasst:
a) Schließen des Einlassluft-Steuer-/Regelventils nach einer Anhalte-Anweisung des Motors; und
b) Öffnen des Einlassluft-Steuer-/Regelventils zur selben Zeit wie eine Öffnungszeit eines Einlassventils eines letzten EinlasstaktZylinders, welcher in dem Einlasstakt ist, auf das Anhalten des Motors hin, oder während des Öffnungs-Zeitraums des Einlassventils.

4. Anhalte-Steuer-/Regelverfahren nach Anspruch 3, ferner umfassend die Schritte:
c) Detektieren einer Drehzahl des Motors; und
d) Detektieren eines Drehwinkels einer Kurbelwelle des Motors,
wobei die Öffnungszeit des Einlassluft-Steuer-/Regelventils auf Grundlage der detektierten Motor-Drehzahl und des detektierten Kurbelwellen-Drehwinkels bestimmt wird.

## Revendications

1. Dispositif de commande d'arrêt pour un moteur à combustion interne, qui commande une position d'arrêt d'un piston dans ledit moteur à l'instant de l'arrêt dudit moteur,
dans lequel ledit moteur est un moteur à trois cylindres, et ledit moteur comprend une soupape de commande d'air d'admission qui est prévue en amont de la soupape d'admission de chaque cylindre pour commander une quantité d'air d'admission dudit moteur,
**caractérisé en ce qu'**il comprend des moyens de commande d'air d'admission pour fermer ladite soupape de commande d'air d'admission après une instruction d'arrêt dudit moteur, et pour ouvrir ladite soupape de commande d'air d'admission au même instant que l'instant d'ouverture d'une soupape d'admission d'un dernier cylindre en course d'admission qui se trouve dans la course d'admission à l'instant de l'arrêt du moteur, ou pendant la période d'ouverture de ladite soupape d'admission.

2. Dispositif de commande d'arrêt selon la revendication 1, comprenant en outre:
des moyens de détection de vitesse de rotation pour détecter une vitesse de rotation dudit moteur; et
des moyens de détection d'angle de rotation de vilebrequin pour détecter un angle de rotation d'un vilebrequin dudit moteur,
dans lequel l'instant d'ouverture de ladite soupape de commande d'air d'admission est déterminé sur la base de la vitesse de rotation de moteur détectée et de l'angle de rotation de vilebrequin détecté.

3. Procédé de commande d'arrêt pour un moteur à combustion interne, qui commande une position d'arrêt d'un piston dans ledit moteur à l'instant de l'arrêt dudit moteur, dans lequel ledit moteur est un moteur à trois cylindres, et ledit moteur comprend une soupape de commande d'air d'admission qui est prévue en amont de la soupape d'admission de chaque cylindre pour commander une quantité d'air d'admission dudit moteur,
ledit procédé de commande d'arrêt étant **caractérisé en ce qu'**il comprend les étapes suivantes:
a) fermer ladite soupape de commande d'air d'admission après une instruction d'arrêt dudit moteur; et
b) ouvrir ladite soupape de commande d'air d'admission au même instant' que l'instant d'ouverture d'une soupape d'admission d'un dernier cylindre en course d'admission qui se trouve dans la course d'admission à l'instant de l'arrêt du moteur, ou pendant la période d'ouverture de ladite soupape d'admission.

4. Procédé de commande d'arrêt selon la revendication 3, comprenant en outre les étapes suivantes:
c) détecter une vitesse de rotation dudit moteur; et
d) détecter un angle de rotation d'un vilebrequin dudit moteur,
dans lequel l'instant d'ouverture de ladite soupape de commande d'air d'admission est déterminé sur la base de la vitesse de rotation de moteur détectée et de l'angle de rotation de vilebrequin détecté.
